# EUROPÄISCHE PATENTSCHRIFT

(11) **EP 3 466 228 B1**
(45) Veröffentlichungstag und Bekanntmachung des Hinweises auf die Patenterteilung: **02.06.2021**
(21) Anmeldenummer: 18198003.8
(22) Anmeldetag: 01.10.2018
(51) Int. Cl.: A01B 23/06, A01B 21/08

(54) **EGGENSCHEIBE FÜR EINE SCHEIBENEGGE**
HARROW DISC FOR A DISC HARROW
DISQUE DE HERSE POUR UN PULVÉRISEUR À DISQUE

(30) Priorität: 05.10.2017 DE 102017123147
(43) Veröffentlichungstag der Anmeldung: 10.04.2019
(73) Patentinhaber: Bremer Maschinenbau GmbH, 31249 Equord (DE)
(72) Erfinder: Bremer, Raymond, 31249 Equord (DE)
(74) Vertreter: Gramm, Lins & Partner Patent- und Rechtsanwälte PartGmbB

(56) Entgegenhaltungen:
- JP-A- S61 271 904
- RU-U1- 78 621
- RU-U1- 178 145
- US-A1- 2013 037 285

## Beschreibung

Die Erfindung betrifft eine Eggenscheibe für eine Scheibenegge mit einer kreisförmigen Außenkontur und Ausnehmungen, die zwischen einem Mittelpunkt der Eggenscheibe und der Außenkontur ausgebildet sind, wobei die Ausnehmungen auf einem Grundkreis mit einem Grundradius, der die halbe Strecke zwischen dem Mittelpunkt und der Außenkontur beträgt, angeordnet sind und die Ausnehmungen sich nach innerhalb und außerhalb des Grundkreises erstrecken, und ein sich außerhalb des Grundkreises befindlicher Anteil des Flächeninhaltes einer Ausnehmung größer als ein sich innerhalb des Grundkreises befindlicher Anteil des Flächeninhaltes der Ausnehmung ist. Die Erfindung betrifft ebenfalls eine Scheibenegge mit zumindest einer erfindungsgemäßen Eggenscheibe.

In der Landwirtschaft und im Gartenbau wird der Boden mittels mechanischen Eingriffs von Werkzeugen eines Bodenbearbeitungsgerätes bearbeitet. Unterschieden wird in der Landwirtschaft zwischen der Primärbodenbearbeitung und der Sekundärbodenbearbeitung. Bei der Primärbodenbearbeitung wird die obere Bodenschicht gelockert, gemischt und gegebenenfalls gewendet. Bodenbearbeitungsgeräte für die Primärbodenbearbeitung sind beispielsweise die Spatmaschine, der Grubber, die Fräse oder der Pflug. Die anschließende Sekundärbodenbearbeitung dient der Vorbereitung der Aussaat, sodass hier eine wesentlich feinere Bearbeitung der obersten Bodenschicht erfolgt. Ein vielfach für die Sekundärbodenbearbeitung genutztes Bodenbearbeitungsgerät ist die Egge. Bei der Egge werden Zinken durch den Boden bewegt, die die oberste Bodenschicht lockern und zerkrümeln, Erdschollen zerkleinern und Unkraut bekämpfen. Die Scheibenegge ist eine von vielen Eggenvarianten, die den Boden aufschneidet und durchmischt. Sie weist üblicherweise eine Vielzahl benachbarter, schräg zueinander gestellter Eggenscheiben auf.

Herkömmliche Eggenscheiben weisen überwiegend eine geschlossene Scheibenfläche auf. Die Scheibenfläche wird auch als Tellerfläche bezeichnet. Da die Eggenscheiben in einer Scheibenegge üblicherweise dicht nebeneinander angeordnet sind, kann es bei Eggenscheiben mit geschlossener Tellerfläche zu Anstauungen und Verstopfungen zwischen benachbarten Eggenscheiben kommen. Bei der Einarbeitung von Gülle in den Boden oder sehr nassen Bodenverhältnissen besteht zudem das Problem, dass eine geschlossene Tellerfläche sich mit Erde vollsetzt. Als Folge dessen können die Eggenscheiben den Boden nicht hinreichend vermischen und zusätzlich wird das Gewicht der kompletten Scheibenegge durch das Vollsetzen mit Erde erhöht, sodass die Belastung auf die Zugmaschine sich erhöht und somit auch der Kraftstoffverbrauch der Zugmaschine steigt. Mit zunehmender Schiefstellung der Eggenscheiben steigt der Kraftaufwand weiter.

Zur Lösung dieser Probleme ist es aus dem Stand der Technik bekannt, Ausnehmungen in den Tellerflächen der Eggenscheiben auszubilden. Erde, die sich sonst auf der geschlossenen Tellerfläche sammeln würde, wird bei einer Tellerfläche mit Ausnehmungen durch die Ausnehmungen geführt, sodass eine bessere Durchmischung ermöglicht wird.

Die CN 203851435 U betrifft eine an ihrem Umfang gezackte Eggenscheibe, auf deren Tellerfläche vier zueinander gleichbeabstandete Ausnehmungen ausgebildet sind. Die Ausnehmungen sind schlitzförmig geformt und verlaufen von einem mittigen Aufhängepunkt der Eggenscheibe aus in Richtung zu dem Umfang der Eggenscheibe. Die Geometrie, Größe und Anzahl der schlitzförmigen Ausnehmungen ermöglicht nicht, dass hinreichend Erde durch die Ausnehmungen hindurchtreten kann. Bei der Bodenbearbeitung setzt sich die Tellerfläche schnell mit Erde voll, es treten die oben beschriebenen Probleme ein, eine gute Durchmischung wird folglich nicht erzielt.

Aus der US 4,099,576 A ist eine an ihrem Umfang gezackte Eggenscheibe mit tropfenförmigen Ausnehmungen bekannt. Die Ausnehmungen sind am Rande der Scheibe angeordnet und ragen in die Zacken des Umfanges hinein. Auch hier kann Erde nicht zufriedenstellend durch die Ausnehmungen hindurchtreten, denn bereits bei den gängigen Arbeitstiefen für die Bodenbearbeitung befinden sich die sehr nah am Rande der Eggenscheibe ausgebildeten und sehr kleinen Ausnehmungen vollständig im Boden.

Die US 1,879,193 B betrifft eine kreisförmige Eggenscheibe mit vier gleich großen und gleich zueinander beabstandeten Ausnehmungen, die jeweils durch einen Steg voneinander getrennt sind. Zwar wird sich diese Eggenscheibe seltener mit Erde vollsetzen, jedoch ist die effektive Tellerfläche der Eggenscheibe sehr klein, insbesondere sind die Stege sehr schmal, so dass nur wenig Erde aus dem Boden nach oben befördert wird. Eine effektive Durchmischung des Bodens und die Stabilität der Eggenscheibe gegen die vielfältigen Beanspruchungen im Boden kann damit nicht gewährleistet werden.

Die RU 2 381 639 C1 betrifft eine an ihrem Umfang gezackte Eggenscheibe mit einer Vielzahl von Ausnehmungen, die als Vierecke kurvenförmig von einem inneren Radius der Eggenscheibe zu einem äußeren Radius der Eggenscheibe verlaufen. Die Summe der Flächeninhalte aller Ausnehmungen beträgt über 25 % des Flächeninhaltes der Kreisform der Eggenscheibe. Auch hier ergibt sich die Problematik einer geringen effektiven Tellerfläche und Stabilität.

Die RU 178 145 U1 betrifft eine Eggenscheibe mit einem gewölbten Grundkörper, in dem radial orientierte Ausnehmungen mit Einbauchungen in Radialerstreckung und Kreisabschnitten an den Endkanten ausgebildet sind.

Die JP S61 271904 A betrifft eine Eggenscheibe mit Einschnitten in der Grundfläche der Scheibe, wobei Material aus der Grundfläche nicht herausgenommen sondern herausgebogen ist, sodass nach innenragende Schaufeln vorhanden sind, die den Boden umlegen.

Die RU 78 621 U1 betrifft eine Eggenscheibe mit einer im Wesentlichen kreisrunden Form mit nach innen ragenden Ausnehmungen sowie innerhalb der Scheibengrundfläche angeordneten Ausnehmungen, die tropfenförmig ausgebildet sind. Die Ausnehmungen erstrecken sich beiderseits eines Grundradiusses, der die halbe Strecke zwischen dem Mittelpunkt und der Außenkontur beträgt.

Die US 2013037285 A1 betrifft eine Eggenscheibe mit einem im Wesentlichen kreisförmigen Grundkörper und einer Vielzahl von Löchern, die sich durch den Grundkörper erstrecken. Die Ausnehmungen sind im Wesentlichen kreisförmig ausgebildet und auf einem Kreisumfang mit dem Zentrum in der Mitte der Scheibe angeordnet.

Bei den bekannten Eggenscheiben ist entweder die Bodenvermischung nicht sehr effektiv und effizient oder die Eggenscheibe nicht hinreichend stabil gegen eine Verformung bei starker Belastung in steinreichen Böden oder bei Dauerbelastung. Es ist daher wünschenswert, eine Eggenscheibe bereitzustellen, die sowohl die notwendige Stabilität gegen Verformung aufweist als auch eine effektive und effiziente Bodenbearbeitung ermöglicht.

Aufgabe der vorliegenden Erfindung ist es, eine Eggenscheibe für ein Bodenbearbeitungsgerät, insbesondere für eine Scheibenegge, bereitzustellen, die eine effektive und effiziente Durchmischung der oberen Bodenschicht ermöglicht, jedoch auch bei unterschiedlichen Arbeitstiefen, wechselnden Böden und unterschiedlichen Arbeitsgeschwindigkeiten so stabil bleibt, dass sie sich nicht verformt und lange haltbar ist. Erfindungsgemäß wird diese Aufgabe durch eine Eggenscheibe mit den Merkmalen des Hauptanspruches 1 und mit einer Scheibenegge mit den Merkmalen des nebengeordneten Anspruchs 10 gelöst. Vorteilhafte Ausgestaltungen und Weiterbildungen der Erfindung sind in den Unteransprüchen, der Beschreibung und den Figuren aufgeführt.

Unter der Außenkontur wird insbesondere eine Umrisslinie verstanden, die den äußersten Rand der Eggenscheibe begrenzt. Die Kreisform der Außenkontur schließt auch technisch bedingte Abweichungen von einer idealen Kreisform im mathematischen Sinne ein, die beispielsweise durch Fertigungstoleranzen entstehen können. Wenn in der Außenkontur Einschnitte und/oder Ausschnitte und/oder an der Außenkontur zumindest eine Schneide ausgebildet ist, dann bezieht sich die Kreisform der Außenkontur auf eine Umrisslinie, die die von einem Mittelpunkt der Eggenscheibe am entferntesten gelegenen Punkte der Eggenscheibe miteinander durch einen Kreis verbindet. Mit anderen Worten werden mögliche Einschnitte, Ausschnitte und Schneiden der Kreisform nicht zugerechnet, es sei denn, sie weisen einen der am entferntesten gelegenen Punkte auf.

Die Tellerfläche bezeichnet im Folgenden die Fläche der Kreisform der Außenkontur. Der Mittelpunkt der Eggenscheibe bezieht sich auf den Mittelpunkt der Kreisform der Außenkontur der Eggenscheibe. Die halbe Strecke zwischen dem Mittelpunkt und der Außenkontur meint die halbe Strecke der längsten Verbindungsgeraden zwischen dem Mittelpunkt und einem Punkt der Außenkontur.

Unter den Ausnehmungen der Eggenscheibe werden insbesondere Löcher verstanden, die sich von einer vorderseitigen Tellerfläche der Eggenscheibe bis zu einer auf der gegenüberliegenden Seite, also rückseitigen Tellerfläche der Eggenscheibe erstrecken. Ausnehmungen sind solche Stellen, an denen das Material der Eggenscheibe nicht mehr vorhanden ist. Bevorzugt erstrecken sich die Ausnehmungen nicht bis zu der Außenkontur. Die Ausnehmungen können bereits beim Urformen der Eggenscheibe durch eine entsprechende Form, die die Ausnehmungen vorsieht, ausgebildet werden. Alternativ können die Ausnehmungen durch Trennverfahren in die Eggenscheibe eingebracht werden. Hierfür bieten sich beispielsweise Verfahren des Scherschneidens, Brennscheidens, insbesondere Laserschneiden, oder des Spanens, insbesondere Bohrens, an. Die Kanten oder inneren Umfänge der Ausnehmungen können als Schneiden ausgebildet sein.

Bevorzugt ist der Flächeninhalt einer Ausnehmung auf der vorderseitigen Tellerfläche so groß wie der Flächeninhalt derselben Ausnehmung auf der rückseitigen Tellerfläche der Eggenscheibe, wobei die Form der Ausnehmung auf Vorderseite der Form auf der Rückseite entspricht. Es ist jedoch auch möglich, dass der Flächeninhalt einer Ausnehmung auf der vorderseitigen Tellerfläche der Eggenscheibe sich von dem Flächeninhalt derselben Ausnehmung auf der rückseitigen Tellerfläche unterscheidet. Gleiches gilt für die Form. Beispielsweise kann sich der Flächeninhalt einer Ausnehmung über die Dicke der Eggenscheibe, also von seiner vorderseitigen zu seiner rückseitigen Tellerfläche, verändern. Unter dem Flächeninhalt der Kreisform der Außenkontur wird der Flächeninhalt eines Kreises mit dem Durchmesser dieser Kreisform verstanden. Insbesondere werden die Ausnehmungen, eventuelle Einschnitte und Ausschnitte und mögliche weitere Löcher, die beispielsweise der Befestigung der Eggenscheibe dienen können, von dem Flächeninhalt der Kreisform der Außenkontur nicht abgezogen.

Mit der erfindungsgemäßen Eggenscheibe wird eine sehr große Stabilität der Eggenscheibe bei gleichzeitiger Erzielung einer guten Bodendurchmischung und Bodenauflockerung durch die Form, Anordnung und Größe der Ausnehmungen erreicht.

Bei der Bodenbearbeitung wird der Großteil der Erde des Bodens nach oben bewegt sowie ein geringer Teil der Erde des Bodens durch die Ausnehmungen geführt. Wenn zu viel Erde zwischen zwei oder mehr Eggenscheiben in einer Scheibenegge vorhanden ist, wird ein Teil der Erde teilweise umgelenkt und durch die Ausnehmung durchgeschoben. Der Wiederstand für den Erdfluss durch die erfindungsgemäßen Ausnehmungen der Eggenscheibe ist so gering, dass der Energieaufwand zum Bearbeiten des Bodens reduziert im Vergleich zu anderen Eggenscheiben mit entsprechender Stabilität ist.

Im Eingriffsbereich der Eggenscheibe mit dem Boden wird die Furchen- und Dammbildung durch die Ausnehmungen zerteilt und der Boden wird ebener. Dies hat beispielsweise für eine anschließende Drillsaat Vorteile, da die Drillschare nicht unnötig auf zuvor produzierte Furchen oder Dämme laufen muss, so dass eine genauere Saatgutablage erfolgen kann. Auch wird die Bildung von Schwaden vermindert. Zudem werden Verstopfungen und ein Anhaften von Erde verhindert, da die Ausnehmungen keinen Halt für insbesondere nasse Erde bieten. Dies ist beispielsweise wichtig, weil Scheibeneggen oft über öffentliche Straßen von einem Acker zu einem anderen Acker transportiert werden. Ein Verkleben und Anhaften von Erde sowohl an der vorderseitigen als auch an der rückseitigen Tellerfläche ist reduziert, so dass es beim Transport auf öffentlichen Straßen zu weniger Verschmutzungen der befahrenen Straßen durch das Abfallen von großen Mengen Erde kommt, was eine potenzielle Gefährdung für andere Verkehrsteilnehmer darstellen würde.

Eine Weiterbildung der Erfindung sieht vor, dass zwischen fünf und acht Ausnehmungen ausgebildet sind. Mit anderen Worten können fünf, sechs, sieben oder acht Ausnehmungen in der Eggenscheibe ausgebildet sein. Es hat sich gezeigt, dass die Verteilung der Summe der Flächeninhalte der Ausnehmungen auf fünf bis acht Ausnehmungen besonders vorteilhaft ist. Einerseits können so weiterhin große Fremdkörper, wie beispielsweise Steine, durch die Ausnehmungen durchtreten, andererseits wird die obere Bodenschicht weiterhin gut durchmischt und Verstopfungen werden vermieden, weil die Ausnehmungen nicht zu groß und in der beschriebenen Weise auf der Tellerfläche angeordnet sind.

Erfindungsgemäß ist es vorgesehen, dass die Ausnehmungen in Richtung ihrer größten Erstreckung eine Länge zwischen 18 % und 25%, eines Durchmessers der Kreisform der Außenkontur aufweisen. Auch dies ermöglicht, dass große Fremdkörper durch die Ausnehmungen durchtreten können, ohne die Durchmischung des Bodens negativ zu beeinflussen. Übliche Durchmesser von Eggenscheiben betragen zwischen 50 cm und 66 cm. Die Ausnehmungen weisen bei Eggenscheiben mit 50 cm Durchmesser in Richtung ihrer größten Erstreckung eine Länge zwischen 90 mm und 125 mm auf.

Ferner kann vorgesehen sein, dass der sich außerhalb des Grundkreises befindliche Anteil des Flächeninhaltes einer Ausnehmung mehr als doppelt so groß wie der sich innerhalb des Grundkreises befindliche Anteil des Flächeninhaltes der Ausnehmung ist. Bevorzugt trifft dies auf mehrere der Ausnehmungen oder auf alle Ausnehmungen zu. Dies ermöglicht vorteilhafterweise, dass der Großteil der durch die Ausnehmungen austretenden Erde nach außerhalb der Eggenscheibe, also von ihrem Mittelpunkt weg, gedrängt wird. Dies vermindert die Wahrscheinlichkeit, dass Erde sich zwischen in einem Bereich innerhalb der Grundkreise benachbarter Eggenscheiben sammelt und die Vermischung der Erde erschwert.

Eine Weiterbildung der Erfindung sieht vor, dass die Ausnehmungen zwischen einem Fußkreis und einem Kopfkreis der Ausnehmungen angeordnet sind, die vollständig innerhalb der Eggenscheibe verlaufen. Der Fußkreis und der Kopfkreis sind Kreise, die die Füße und Köpfe der Ausnehmungen verbinden und um den Mittelpunkt der Eggenscheibe herum verlaufen. Der Fuß einer Ausnehmung ist die Linie oder der Punkt einer Ausnehmung, die oder der dem Mittelpunkt der Eggenscheibe am nächsten gelegen ist. Der Kopf einer Ausnehmung ist die Linie oder der Punkt, die oder der der Außenkontur der Eggenscheibe am nächsten gelegen ist. Der Fußkreis und der Kopfkreis können von der Form eines Kreises abweichen, beispielsweise oval oder als ein n-Eck verlaufen, wenngleich der Verlauf in der Form eines Kreises bevorzugt ist. Im Falle eines n-Ecks sind die Füße und/oder Köpfe der Ausnehmungen nicht auf einer Kreislinie angeordnet, sondern werden durch die jeweils kürzesten Verbindungsgeraden der Füße bzw. Köpfe zueinander miteinander verbunden, so dass ein n-Eck mit einer Anzahl von Ecken, die der Anzahl der Ausnehmungen entspricht, den Fuß- bzw. Kopfkreis ausbildet.

Ferner sieht eine Weiterbildung der Erfindung vor, dass ein Fußradius des Fußkreises der Ausnehmungen zumindest 15%, bevorzugt zumindest 20%, und/oder ein Kopfradius des Kopfkreises der Ausnehmungen zumindest 70%, bevorzugt zumindest 80%, eines Kreisradius der Kreisform der Außenkontur beträgt. Der Fußradius und der Kopfradius lassen sich als Strecke von dem Mittelpunkt der Eggenscheibe zu dem Fußkreis bzw. Kopfkreis messen. Im Falle eines ovalen oder n-eckigen Fuß- bzw. Kopfkreises ist der Fuß- bzw. Kopfradius die kürzeste Verbindungsstrecke zwischen dem Mittelpunkt der Eggenscheibe und dem Fuß- bzw. Kopfkreis. Durch diese Weiterbildung wird sichergestellt, dass der relevante Arbeitsbereich der Bodendurchmischung durch die Ausnehmungen abgedeckt wird, wobei gleichzeitig an der Befestigung und Lagerung der Eggenscheibe an einer Scheibenegge in einem Bereich um ihren Mittelpunkt herum sowie an der kreisförmigen Außenkontur, die in besonderem Maße beim Eingriff in den Boden belastet wird, keine Stabilitätseinbußen auftreten.

Zudem kann vorgesehen sein, dass die Gesamtfläche der Ausnehmungen zwischen 35% und 60% einer zwischen dem Kopfkreis und dem Fußkreis befindlichen Ringfläche beträgt. Dadurch ist bei der durch die Erfindung erzielten effektiven Durchmischung in besonderem Maße gewährleistet, dass hinreichend effektive Tellerfläche, also eine solche Tellerfläche, an der Material der Eggenscheibe vorhanden ist, zwischen den Ausnehmungen vorhanden ist, entlang derer die Erde von dem Boden aus nach oben transportiert werden kann.

Es kann außerdem vorgesehen sein, dass die Eggenscheibe gewölbt, durchgängig gewölbt oder mit einer Abflachung in einem Bereich um den Mittelpunkt ausgebildet ist. Beispielsweise kann die Eggenscheibe mehrere Wölbungen aufweisen, die z.B. die Form einer Welle ausbilden. Mit einer gewölbten Eggenscheibe kann prinzipiell mehr Erde aus dem Boden aufgenommen werden, was die Durchmischung des Bodens effizienter macht. Eine Abflachung in einem Bereich um den Mittelpunkt ermöglicht eine einfache und verspannungsfreie Befestigung der Eggenscheibe im Bereich der Abflachung beispielsweise an einer Nabe eines Armes eines Bodenbearbeitungsgerätes.

Vorgesehen sein kann auch, dass an einem Umfang der Ausnehmungen eine Schräge oder eine Schneide ausgebildet ist. Dadurch wird erreicht, dass die Erde, die durch die Ausnehmungen hindurchtritt, zusätzlich zerkrümelt und darin befindliche Erdschollen sowie Unkraut zerkleinert werden, so dass die Durchmischung weiter verbessert und der Boden besonders gut für die Aussaat vorbereitet wird. Insbesondere können an je einer Ausnehmung mehrere Schrägen und/oder Schneiden ausgebildet sein.

Bei der Erfindung kann ferner vorgesehen sein, dass in der Außenkontur Einschnitte und/oder Ausschnitte ausgebildet sind und/oder an der Außenkontur zumindest eine Schneide ausgebildet ist. Insbesondere ist es vorteilhaft, wenn mehrere Schneiden im Wechsel mit Einschnitten und/oder Ausschnitten an der Außenkontur ausgebildet sind. Hierdurch wird die Durchmischung verbessert, weil die Erde bei der Durchmischung zerkrümelt wird, Erdschollen zerkleinert werden und Unkraut im Boden geschnitten wird. Bevorzugt ragen die Einschnitte oder Ausschnitte an der Außenkontur nicht über den Kopfkreis in Richtung des Mittelpunktes hinaus.

Es kann außerdem vorgesehen sein, dass die Breite der Ausnehmung bei halber Erstreckung der Ausnehmung in Richtung vom Mittelpunkt zu der Außenkontur größer als die Länge der halben Erstreckung, insbesondere der gesamten Erstreckung der Ausnehmung in die Richtung von dem Mittelpunkt zu der Außenkontur ist.

Die Erfindung betrifft weiterhin eine Scheibenegge mit mehreren erfindungsgemäßen Eggenscheiben, die mittels Naben an Armen, die sich von ihrer Lagerung an der Scheibenegge in Richtung nach unten zu dem Boden erstrecken und schräg in Richtung von einem distalen Ende zu der Mitte der Scheibenegge orientiert sind, an der Scheibenegge in Untergriff und in Schrägstellung nebeneinander angeordnet sind. Als Bodenbearbeitungsgeräte können dabei nicht nur verschiedene Arten von Scheibeneggen dienen. Die erfindungsgemäße Eggenscheibe kann beispielsweise auch als Randscheibe bei einem Grubber oder einem Pflug oder als Vorsatzschneide bei einer Drillmaschine eingesetzt werden.

Im Folgenden werden Ausführungsbeispiele der Erfindung anhand von Zeichnungen näher erläutert. Es zeigen:
- Figur 1: eine schematische Ansicht eines Ausführungsbeispiels einer erfindungsgemäßen Eggenscheibe mit fünf kreisförmigen Ausnehmungen,
- Figur 2: eine schematische Darstellung eines nicht durch die Erfindung erfassten Ausführungsbeispiels einer Eggenscheibe mit fünf trapezförmigen Ausnehmungen,
- Figur 3: eine schematische Darstellung eines Ausführungsbeispiels einer erfindungsgemäßen Eggenscheibe mit sechs ovalförmigen Ausnehmungen,
- Figur 4: eine schematische Darstellung eines Ausführungsbeispiels einer erfindungsgemäßen Eggenscheibe mit acht kreisförmigen Ausnehmungen,
- Figur 5: eine perspektivische Darstellung zweier Eggenscheiben nach einem Ausführungsbeispiel der Erfindung mit sechs kreisförmigen Ausnehmungen in einem Boden und
- Figur 6: einen Ausschnitt eines Bodenbearbeitungsgeräts mit mehreren Eggenscheiben nach einem Ausführungsbeispiel der Erfindung.

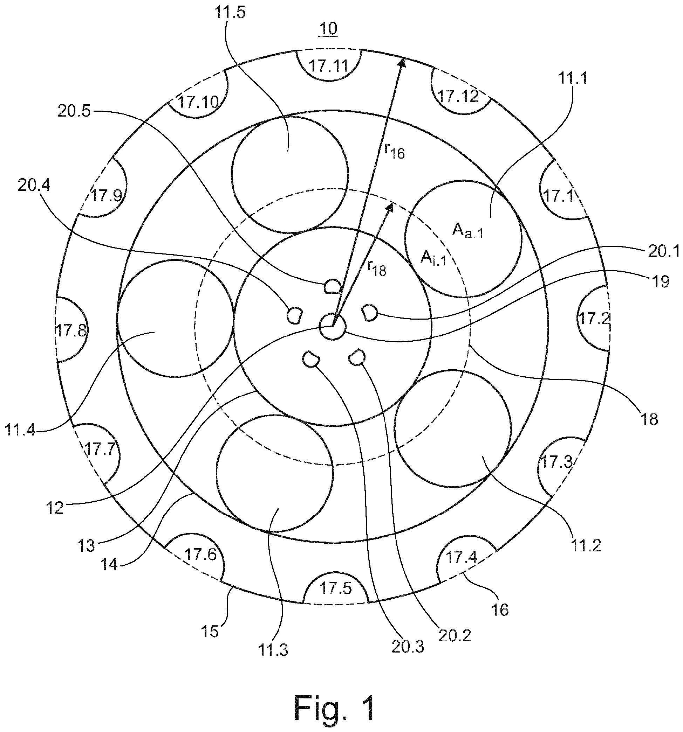

Figur 1 zeigt ein Ausführungsbeispiel einer erfindungsgemäßen Eggenscheibe 10, die fünf zueinander gleichbeabstandete, kreisförmige Ausnehmungen 11.1, 11.2, 11.3, 11.4 und 11.5 aufweist. Die kreisförmigen Ausnehmungen 11.1 bis 11.5 berühren jeweils in einem ihrer Punkte, der einem Mittelpunkt 12 der Eggenscheibe 10 am nächsten gelegen ist, einen Fußkreis 13. Der Fußkreis 13 verbindet so alle fünf Ausnehmungen 11.1 bis 11.5 miteinander. Ein Kopfkreis 14 verbindet alle Punkte der kreisförmigen Ausnehmungen 11.1 bis 11.5, die jeweils die größte Distanz zum Mittelpunkt 12 bzw. die geringste Distanz zu einer kreisförmigen Außenkontur 15 der Eggenscheibe 10 aufweisen.

Die Kreisform 16 der kreisförmigen Außenkontur 15 verläuft entlang der bezeichneten gestrichelten Linie um die Außenkontur 15, die mit Einschnitten 17.1, 17.2 bis 17.12 ausgebildet ist, herum. Die Kreisform 16 verläuft mit einem Kreisradius r₁₆. Konzentrisch mit der Kreisform 16 verläuft ein Grundkreis 18 mit einem Grundradius r₁₈, der dem halben Kreisradius r₁₆ entspricht. Um den Mittelpunkt 12 herum ist ein Mittelloch 19 ausgebildet. Das Mittelloch 19 kann beispielsweise auf eine Nabe eines nicht dargestellten Armes eines Bodenbearbeitungsgeräts aufgesteckt werden. Gleichbeabstandet zueinander und zu dem Mittelloch 19 sind Befestigungslöcher 20.1, 20.2 bis 20.5 um das Mittelloch 19 herum ausgebildet. Bei den Befestigungslöchern 20.1 bis 20.5 kann es sich beispielsweise um Gewindelöcher handeln. Durch die Befestigungslöcher 20.1 bis 20.5 lässt sich die Eggenscheibe 10 an der Nabe des Bodenbearbeitungsgeräts, beispielsweise über Schrauben, fixieren, um die Eggenscheibe 10 sicher auf der Nabe zu montieren. Alternativ kann eine andere Anordnung und eine andere Anzahl an Löchern 20.1 bis 20.i, beispielsweise vier oder sechs Löcher 20.1 bis 20.i, gewählt werden.

Wie in Figur 1 zu erkennen ist, ist ein außerhalb des Grundkreises 18 liegender, also näher an der Außenkontur befindlicher, Anteil des Flächeninhaltes der Ausnehmungen 11.1 bis 11.5 jeweils größer als der restliche Anteil des gesamten Flächeninhaltes der Ausnehmungen 11.1 bis 11.5, der sich innerhalb des Grundkreises 18 befindet. Zur Verdeutlichung dessen sind die Flächeninhalte in der Ausnehmung 11.1 gekennzeichnet. Insbesondere ist hier zu erkennen, dass ein außerhalb des Grundkreises liegender Flächeninhalt A_{a.1} mehr als doppelt so groß wie der innerhalb des Grundkreises 18 liegende Flächeninhalt A_{i.1} der Ausnehmung 11.1 ist. Dies trifft auch auf die restlichen Ausnehmungen 11.2 bis 11.5 zu, wobei in Varianten der Erfindung andere Dimensionen gewählt werden können. Die Ausnehmungen können auch näher zum Mittelpunkt oder näher zu der Außenkontur ausgebildet sein, wodurch sich die Anteile der Flächeninhalte innerhalb und außerhalb des Grundkreises verändern. Die Ausnehmungen sind in dem vorliegenden Ausführungsbeispiel alle gleich groß und gleich zueinander beabstandet. Alternativ können die Ausnehmungen unterschiedlich groß ausgebildet und unterschiedlich voneinander beabstandet sein.

Die Summe der Flächeninhalte der kreisförmigen Ausnehmungen 11.1 bis 11.5 der Eggenscheibe 10 in Figur 1 beträgt in dem Ausführungsbeispiel 20% des Flächeninhaltes der Kreisform 16 der Außenkontur 15. Zu beachten ist, dass sämtliche Figuren lediglich eine schematische Darstellung und keine maßstabsgetreuen Darstellungen sind.

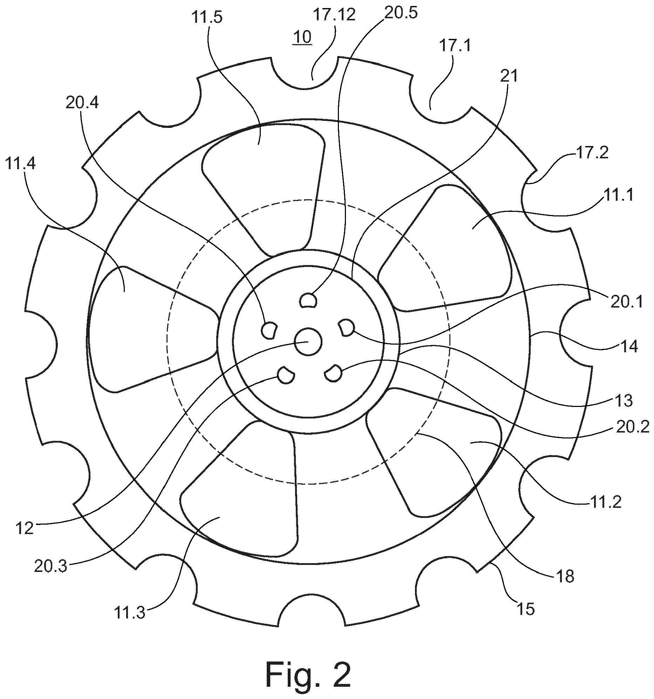

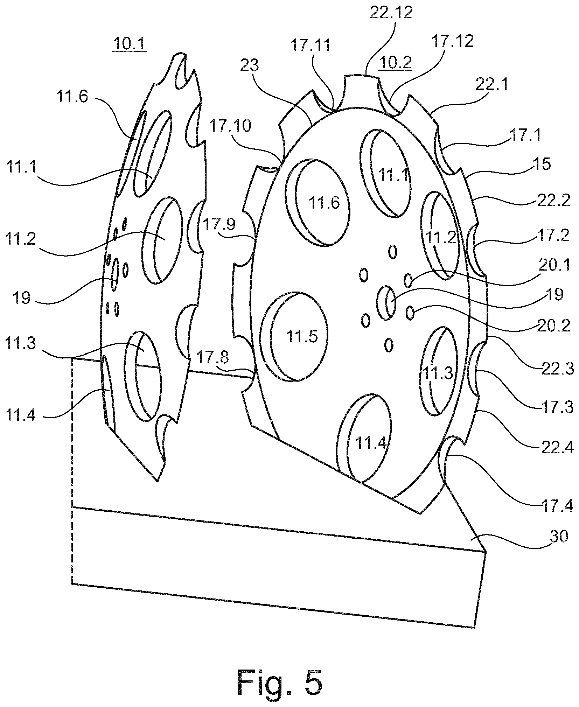

Figur 2 zeigt ein nicht durch die Erfindung erfasstes Ausführungsbeispiel einer Eggenscheibe 10 mit trapezförmigen Ausnehmungen 11.1, 11.2 bis 11.5. Die langen Seitenkanten des Trapezes laufen in Richtung von der Außenkontur 15 zu dem Mittelpunkt 12 konisch aufeinander zu. Alternativ können die Längskanten des Trapezes in Richtung von dem Mittelpunkt 12 zu der Außenkontur 15 hin oder in eine Richtung quer zu dieser Richtung konisch zulaufen. Die kurzen Seitenkanten des Trapezes verlaufen konzentrisch um den Mittelpunkt 12 herum. Alternativ können die kurzen Seitenkanten jedoch auch als eine Gerade oder ebenfalls teilkreisförmig, aber nicht konzentrisch verlaufen. Um den Mittelpunkt 12 der Eggenscheibe 10 herum ist hier beispielhaft kein Mittelloch eingebracht, so dass die Eggenscheibe 10 über die Befestigungslöcher 20.1 bis 20.5 befestigt wird. Die Eggenscheibe 10 ist in einem Bereich, der durch eine Kreislinie 21 angedeutet wird, flach ausgebildet. Um die Kreislinie 21 herum ist die Eggenscheibe 10 bis zu einem Ansatz der Einschnitte 17.1 bis 17.12 durchgängig gewölbt ausgebildet, was aufgrund der frontalen Ansicht auf die vorderseitige Tellerfläche der Eggenscheibe 10 jedoch nicht zu erkennen ist. Dies wird im Folgenden noch einmal anhand der Figur 5 beschrieben. Die Summe der Flächeninhalte der trapezförmigen Ausnehmungen 11.1 bis 11.5 beträgt bei der Eggenscheibe 10 nach Figur 2 25% des Flächeninhaltes der Kreisform 16 der Außenkontur 15.

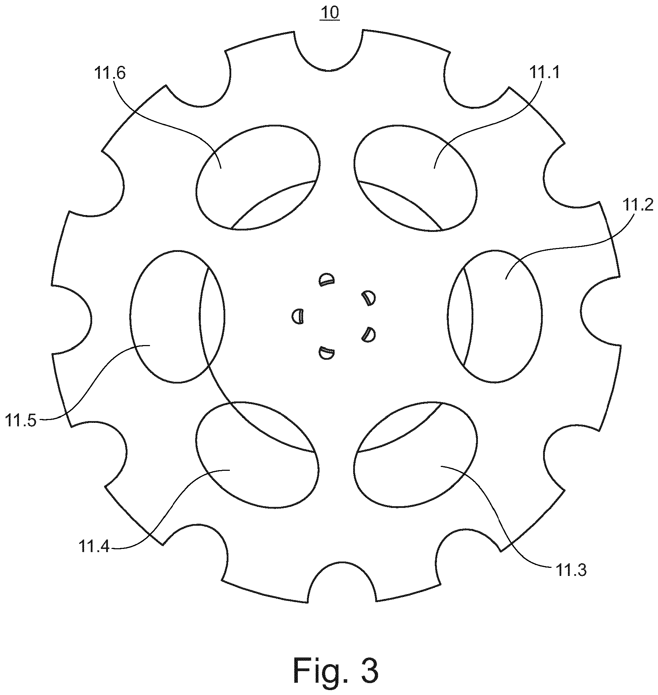

Figur 3 zeigt ein Ausführungsbeispiel einer erfindungsgemäßen Eggenscheibe 10, bei der sechs Ausnehmungen 11.1, 11.2 bis 11.6 ovalförmig ausgebildet sind. Die Breite der Ausnehmungen 11.1 bis 11.6 im Wesentlichen quer zu der und bei halber Erstreckung der Ausnehmungen 11.1 bis 11.6 in Richtung von dem Mittelpunkt 12 zu der Außenkontur 15 ist größer als die Länge der Ausnehmungen 11.1 bis 11.6 in der Richtung vom Mittelpunkt 12 zu der Außenkontur 15. Mit anderen Worten verläuft die kurze Achse der ovalförmigen Ausnehmungen 11.1 bis 11.6 in Richtung vom Mittelpunkt 12 zu der Außenkontur 15, während die lange Achse der ovalförmigen Ausnehmungen 11.1 bis 11.6 im Wesentlichen quer zu dieser Richtung verläuft. Die Summe der Flächeninhalte der ovalförmigen Ausnehmungen 11.1 bis 11.6 beträgt bei der Eggenscheibe 10 nach Figur 3 25% des Flächeninhaltes der Kreisform 16 der Außenkontur 15.

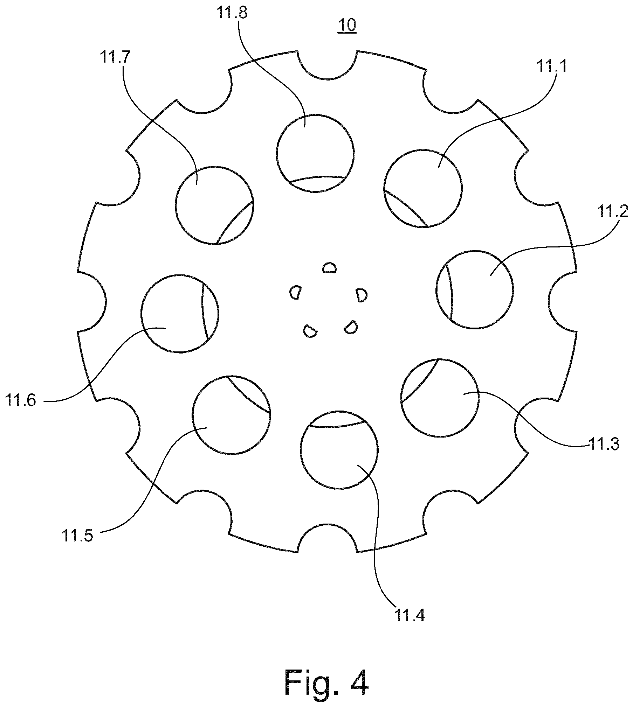

Figur 4 zeigt ein Ausführungsbeispiel einer erfindungsgemäßen Eggenscheibe 10, bei der acht kreisförmige Ausnehmungen 11.1, 11.2 bis 11.8 ausgebildet sind. Die Summe der Flächeninhalte der kreisförmigen Ausnehmungen 11.1 bis 11.8 beträgt bei der Eggenscheibe 10 nach Figur 4 20% des Flächeninhaltes der Kreisform 16 der Außenkontur 15.

Figur 5 zeigt zwei identische Eggenscheiben 10.1 und 10.2 gemäß einem Ausführungsbeispiel der Erfindung mit jeweils sechs kreisförmigen Ausnehmungen 11.1, 11.2 bis 11.6 in einem Boden 30 und in einer beispielhaft für eine Bodenbearbeitung gewählten Arbeitstiefe. Zu erkennen sind die rückseitige Tellerfläche der Eggenscheibe 10.1 und die vorderseitige Tellerfläche der Eggenscheibe 10.2. Beide Eggenscheiben 10.1 und 10.2 sind an ihrer rückseitigen Tellerfläche durchgängig gewölbt. Wie an der Eggenscheibe 10.2 zu erkennen ist, ist die vorderseitige Tellerfläche hingegen nur bis zu einem Ansatz der Einschnitte 17.1 bis 17.12 gewölbt. Zwischen den Einschnitten 17.1 bis 17.12 ist die Außenkontur mit Schneiden 22.1 bis 22.12 ausgebildet. An einem Außenumfang 23 der Außenkontur 15, in den die Einschnitte 17.1 bis 17.12 hineinragen, ist die vorderseitige Tellerfläche der Eggenscheiben 10.1 und 10.2 flach ausgebildet.

Die Eggenscheiben 10.1 und 10.2 der Figur 5 befinden sich mit einem unteren Abschnitt ihrer Tellerfläche, in dem Einschnitte 17.5, 17.6., 17.7 und 17.8 ausgebildet sind, teilweise in dem Boden 30. Der untere Abschnitt der Eggenscheiben 10.1 und 10.2, der sich in dem Boden befindet, ist hier nur beispielhaft für eine mögliche Arbeitstiefe in einem Boden 30 dargestellt. Die Einschnitte 17.5, 17.6., 17.7 und 17.8 sind hier nicht sichtbar, weil sie sich im Boden 30 befinden. Bei der Eggenscheibe 10.1 ist ein unterer Abschnitt einer rückseitigen Tellerfläche und bei der Eggenscheibe 10.2 ein unterer Abschnitt einer vorderseitigen Tellerfläche nicht sichtbar. Die Ausnehmung 11.4 befindet sich bei beiden Eggenscheiben 10.1 und 10.2 bei der dargestellten Arbeitstiefe zu einem Teil in dem Boden 30. Die anderen Ausnehmungen 11.1, 11.2, 11.3, 11.5 und 11.6 sind äquidistant zueinander und zum Mittelloch 19 beabstandet, so dass auch diese bei Rotation der Eggenscheiben 10.1 und 10.2 in dem Boden 30 gleich wie die Ausnehmung 11.4 verlaufen werden. Durch die Wahl der Arbeitstiefe einerseits und die Ausbildung der Form, Anordnung und Größe der Ausnehmungen 11.1 bis 11.6 bei der Herstellung der Eggenscheiben 10.1 und 10.2 andererseits kann bestimmt werden, inwieweit die Ausnehmungen 11.1 bis 11.6 bei der Bodenbearbeitung in den Boden 30 hineinragen. Hierdurch kann die Erde zusätzlich mittels der Ausnehmungen 11.1 bis 11.6 bearbeitet werden, insbesondere wenn an ihrem Umfang Schrägen oder Schneiden ausgebildet sind.

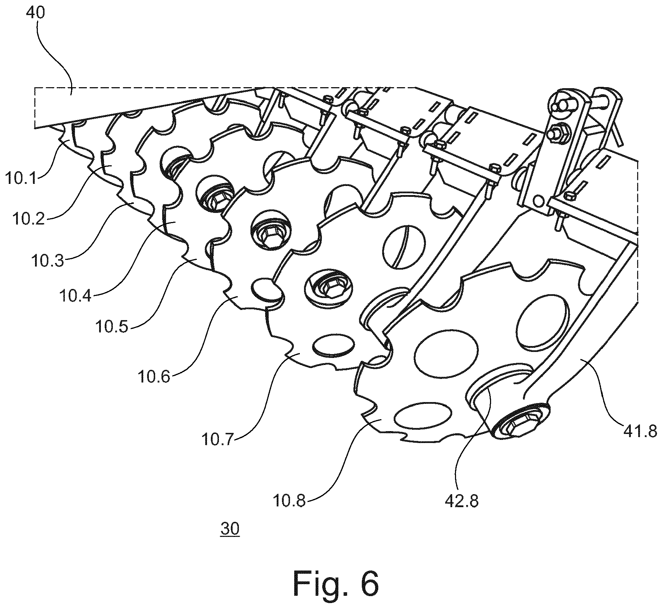

Figur 6 zeigt einen Teil eines Bodenbearbeitunsgerätes 40, hier in Form einer Scheibenegge 40, an dem mehrere Eggenscheiben 10.1, 10.2 bis 10.8 gemäß der Figur 1 befestigt sind. Die mehreren, an der Scheibenegge 40 befestigten Eggenscheiben 10.1 bis 10.8 werden auch als eine Batterie bezeichnet. Wie an der Eggenscheibe 10.8 gut zu erkennen ist, sind die Eggenscheiben 10.1 bis 10.8 mittels Naben 42.1 bis 42.8 an Armen 41.1 bis 41.8 der Scheibenegge 40 im Untergriff befestigt. Die Arme 41.1 bis 41.8 erstrecken sich von ihrer Lagerung an der Scheibenegge 40 in Richtung nach unten zu dem Boden 30 hin. Die Arme 41.1 bis 41.8 sind schräg in Richtung von einem distalen Ende des Bodenbearbeitungsgerätes 40, an dem der Arm 41.8 gelagert ist, zu der Mitte des Bodenbearbeitungsgerätes 40, wo die Eggenscheiben 10.1 bis 10.5 angeordnet sind, orientiert. Durch die Befestigung der Eggenscheiben 10.1 bis 10.8 an den schräg orientierten Armen 41. 1 bis 41.8 sind auch die Eggenscheiben 10.1 bis 10.8 entsprechend schräg orientiert. Alternativ können die Eggenscheiben 10.1 bis 10.8 auch gerade oder in die entgegengesetzte Richtung schräg verlaufend oder auf Obergriff mittels entsprechender Arme 41.1 bis 41.8 orientiert sein.

Durch die schräge Anordnung der Eggenscheiben 10.1 bis 10.8 an der Scheibenegge 40 kann die Erde im Boden in einem unteren Abschnitt der Eggenscheiben 10.1 bis 10.8 nicht entweichen und wird an den Eggenscheiben 10.1 bis 10.8 entlanggeführt. Zwangsläufig wird bei einer Schrägstellung konventioneller Eggenscheiben jedoch sehr viel Erde aus dem Boden schräg zur Zugrichtung der Scheibenegge geworfen. Der Kraftaufwand zum Ziehen einer Scheibenegge mit mehreren Batterien steigt mit erhöhter Schrägstellung der Batterien erheblich. Auch bei höheren Arbeitstiefen steigt der Kraftaufwand stark an. Insbesondere bei unebenen Böden muss eine höhere Arbeitstiefe eingestellt werden, um den Boden zu egalisieren, was zum Beispiel nach dem Pflügen erforderlich ist.

Die erfindungsgemäßen Eggenscheiben 10.1 bis 10.8 wirken bei schräger Anordnung an der Scheibenegge 40 wie ein Notventil, das es ermöglicht, überschüssige Erde aus dem Boden 30 durch die Ausnehmungen 11.1 bis 11.i durchzuführen und den Großteil der Erde, wie konventionelle Eggenscheiben, weiterhin an den Eggenscheiben 10.1 bis 10.8 entlang zu führen, um den Boden effektiv durchzumischen. Damit wird der Energieaufwand zum Ziehen eines erfindungsgemäßen Bodenbearbeitungsgerätes 40 reduziert.

Ein weiteres Problem bei der schrägen Anordnung konventioneller Eggenscheiben an einem Bodenbearbeitungsgerät 40 ist, dass die das Bodenbearbeitungsgerät 40 ziehende Zugmaschine in die Richtung der schrägen Anordnung der Batterie zieht, mit anderen Worten einen Seitenzug erfährt. Der Fahrer der Zugmaschine muss kontinuierlich gegenlenken, was eine gleichmäßige Bodenbearbeitung sehr schwer gestaltet und zu einer Ermüdung des Fahrers beiträgt. Bei den erfindungsgemäßen Eggenscheiben 10.1 bis 10.8 wird der Seitenzug vermindert, indem ein Teil an Erde nicht zur Seite sondern parallel zur Fahrtrichtung aus dem Boden 30 heraus gefördert wird.

### Bezugszeichenliste

- A_{a.1}: Flächeninhalt außerhalb des Grundkreises der Ausnehmung 11.1
- A_{i.1}: Flächeninhalt innerhalb des Grundkreises der Ausnehmung 11.1
- i = 1, 2, 3, ...: Anzahl vorhandener Elemente
- r₁₆: Kreisradius
- r₁₈: Grundradius
- 10: Eggenscheibe
- 11.1 bis 11.i: Ausnehmungen
- 12: Mittelpunkt
- 13: Fußkreis
- 14: Kopfkreis
- 15: Außenkontur
- 16: Kreisform
- 17.1 bis 17.i: Einschnitte, Ausschnitte
- 18: Grundkreis
- 19: Mittelloch
- 20.1 bis 20.i: Befestigungslöcher
- 21: Kreislinie
- 22.1 bis 22.i: Schneiden
- 23: Außenumfang
- 30: Boden
- 40: Bodenbearbeitungsgerät, Scheibenegge
- 41.1 bis 41.i: Arme
- 42.1 bis 42.i: Naben

## Patentansprüche

1. Eggenscheibe (10) für eine Scheibenegge (40) mit
a) einer kreisförmigen Außenkontur (15) und
b) Ausnehmungen (11.1 bis 11.i), die zwischen einem Mittelpunkt (12) der Eggenscheibe (10) und der Außenkontur (15) ausgebildet sind, wobei die Summe der Flächeninhalte der Ausnehmungen (11.1 bis 11. i) zwischen 10% und 25%, bevorzugt zwischen 15% und 25%, insbesondere bevorzugt zwischen 15% und 20% des Flächeninhaltes der Kreisform (16) der Außenkontur (15) beträgt, und
c) die Ausnehmungen (11.1 bis 11.i) auf einem Grundkreis (18) mit einem Grundradius (r₁₈), der die halbe Strecke zwischen dem Mittelpunkt (12) und der Außenkontur (15) beträgt, angeordnet sind und die Ausnehmungen (11.1 bis 11.i) kreisförmig ausgebildet sind und sich nach innerhalb und außerhalb des Grundkreises (18) erstrecken, **dadurch gekennzeichnet, dass**
d) ein sich außerhalb des Grundkreises (18) befindlicher Anteil des Flächeninhaltes einer Ausnehmung (11.i) größer als ein sich innerhalb des Grundkreises (18) befindlicher Anteil des Flächeninhaltes der Ausnehmung (11.i) ist,
e) dass die Ausnehmungen (11.1 bis 11.i) alternativ ovalförmig mit radial orientierter kurzer Achse ausgebildet sind und
dass die kreisförmigen oder alternativ ovalförmigen Ausnehmungen in Richtung ihrer größten Erstreckung eine Länge zwischen 18% und 25% des Durchmessers der Kreisform der Außenkontur (15) aufweisen.

2. Eggenscheibe (10) nach Anspruch 1, **dadurch gekennzeichnet, dass** zwischen fünf und acht Ausnehmungen (11.1 bis 11.i) ausgebildet sind.

3. Eggenscheibe (10) nach einem der voranstehenden Ansprüche, **dadurch gekennzeichnet, dass** der sich außerhalb des Grundkreises (18) befindliche Anteil des Flächeninhaltes einer Ausnehmung (11.i) mehr als doppelt so groß wie der sich innerhalb des Grundkreises (18) befindliche Anteil des Flächeninhaltes der Ausnehmung (11.i) ist.

4. Eggenscheibe (10) nach einem der voranstehenden Ansprüche, **dadurch gekennzeichnet, dass** die Ausnehmungen (11.1 bis 11.i) zwischen einem Fußkreis (13) und einem Kopfkreis (14) der Ausnehmungen (11 bis 11.i) angeordnet sind, die vollständig innerhalb der Eggenscheibe (10) verlaufen.

5. Eggenscheibe(10) nach Anspruch 4, **dadurch gekennzeichnet, dass** ein Fußradius des Fußkreises (13) der Ausnehmungen (11.1 bis 11.i) zumindest 15% und/oder ein Kopfradius des Kopfkreises (14) der Ausnehmungen (11.1 bis 11.i) zumindest 70% eines Kreisradius (r₁₆) der Kreisform (16) der Außenkontur (15) beträgt.

6. Eggenscheibe (10) nach Anspruch 4 oder 5, **dadurch gekennzeichnet, dass** die Gesamtfläche der Ausnehmungen (11.1 bis 11.i) zwischen 35% und 60% einer zwischen dem Fußkreis (13) und dem Kopfkreis (14) befindlichen Ringfläche beträgt.

7. Eggenscheibe (10) nach einem der voranstehenden Ansprüche, **dadurch gekennzeichnet, dass** die Eggenscheibe (10) gewölbt, durchgängig gewölbt oder mit einer Abflachung in einem Bereich um den Mittelpunkt (12) ausgebildet ist.

8. Eggenscheibe (10) nach einem der voranstehenden Ansprüche, **dadurch gekennzeichnet, dass** an einem Umfang der Ausnehmungen (11.1 bis 11.i) eine Schräge oder Schneide ausgebildet ist.

9. Eggenscheibe (10) nach einem der voranstehenden Ansprüche, **dadurch gekennzeichnet, dass** in der Außenkontur (15) Einschnitte und/oder Ausschnitte (17.1 bis 17.i) ausgebildet sind und/oder an der Außenkontur (15) zumindest eine Schneide (22.1 bis 22.i) ausgebildet ist.

10. Scheibenegge (40) mit Eggenscheiben (10) nach einem der voranstehenden Ansprüche, **dadurch gekennzeichnet, dass** mehrere Eggenscheiben (10.1 - 10.8) mittels Naben (42.1 - 42.8) an Armen (41.1 - 41.8), die sich von ihrer Lagerung an der Scheibenegge (40) in Richtung nach unten zu dem Boden (30) erstrecken und schräg in Richtung von einem distalen Ende zu der Mitte der Scheibenegge (40) orientiert sind, an der Scheibenegge (40) in Untergriff und in Schrägstellung nebeneinander angeordnet sind.

## Claims

1. Harrow disc (10) for a disc harrow (40), having
a) a circular outer contour (15) and
b) recesses (11.1 to 11.i) that are formed between a centre point (12) of the harrow disc (10) and the outer contour (15), wherein the sum of the area of the recesses (11.1 to 11.i) is between 10% and 25%, preferably between 15% and 25%, in particular preferably between 15% and 20% of the area of the circular shape (16) of the outer contour (15), and
c) the recesses (11.1 to 11.i) are arranged on a base circle (18) with a base radius (r₁₈) that amounts to half the distance between the centre point (12) and the outer contour (15), and the recesses (11.1 to 11.i) are circular and extend to within and outside the base circle (18), **characterized in that**
d) a portion of the area of a recess (11.i) located outside the base circle (18) is greater than a portion of the area of the recess (11.i) located within the base circle (18),
e) **in that** the recesses (11.1 to 11.i) are alternatively oval with a radially oriented short axis, and
**in that** the circular or alternatively oval recesses in the direction of their largest extent have a length of between 18% and 25% of the diameter of the circular shape of the outer contour (15).

2. Harrow disc (10) according to Claim 1, **characterized in that** between five and eight recesses (11.1 to 11.i) are formed.

3. Harrow disc (10) according to either of the preceding claims, **characterized in that** the portion of the area of a recess (11.i) located outside the base circle (18) is more than twice the size of the portion of the area of the recess (11.i) located within the base circle (18).

4. Harrow disc (10) according to one of the preceding claims, **characterized in that** the recesses (11.1 to 11.i) are arranged between a root circle (13) and a tip circle (14) of the recesses (11 to 11.i) that run completely within the harrow disc (10).

5. Harrow disc (10) according to Claim 4, **characterized in that** a root radius of the root circle (13) of the recesses (11.1 to 11.i) is at least 15%, and/or a tip radius of the tip circle (14) of the recesses (11.1 to 11.i) is at least 70%, of a circle radius (r₁₆) of the circular shape (16) of the outer contour (15).

6. Harrow disc (10) according to Claim 4 or 5, **characterized in that** the total area of the recesses (11.1 to 11.i) is between 35% and 60% of an annular area located between the root circle (13) and the tip circle (14).

7. Harrow disc (10) according to one of the preceding claims, **characterized in that** the harrow disc (10) is curved, continuously curved or formed with a flattened portion in a region around the centre point (12).

8. Harrow disc (10) according to one of the preceding claims, **characterized in that** an inclination or cutting edge is formed on a circumference of the recesses (11.1 to 11.i) .

9. Harrow disc (10) according to one of the preceding claims, **characterized in that** incisions and/or cutouts (17.1 to 17.i) are formed in the outer contour (15), and/or at least one cutting edge (22.1 to 22.i) is formed on the outer contour (15).

10. Disc harrow (40) with harrow discs (10) according to one of the preceding claims, **characterized in that** a plurality of harrow discs (10.1-10.8) are arranged in engagement on the disc harrow (40) under the latter and in an oblique position next to one another by means of hubs (42.1-42.8) on arms (41.1-41.8) that extend from their mounting on the disc harrow (40) downwards towards the ground (30) and are oriented obliquely in a direction from a distal end to the centre of the disc harrow (40).

## Revendications

1. Disque de herse (10) pour une herse à disques (40), comportant
a) un contour extérieur circulaire (15) et
b) des évidements (11.1 à 11.i) qui sont formés entre un point central (12) du disque de herse (10) et le contour extérieur (15),
la somme des superficies des évidements (11.1 à 11.i) étant comprise entre 10 % et 25 %, de préférence entre 15 % et 25 %, de manière particulièrement préférée entre 15 % et 20 % de la superficie de la forme circulaire (16) du contour extérieur (15), et
c) les évidements (11.1 à 11.i) étant disposés sur un cercle de base (18) dont le rayon de base (r₁₈) est égal à la moitié de la distance entre le point central (12) et le contour extérieur (15), et les évidements (11.1 à 11.i) étant réalisés en forme circulaire et s'étendent à l'intérieur et à l'extérieur du cercle de base (18),
**caractérisé en ce que**
d) une part de la superficie d'un évidement (11.i) située à l'extérieur du cercle de base (18) est supérieure à une part de la superficie de l'évidement (11.i) située à l'intérieur du cercle de base (18), **en ce que**
e) les évidements (11.1 à 11.i) sont réalisés alternativement en forme ovale ayant un axe court orienté radialement, et **en ce que**
les évidements en forme circulaire ou alternativement en forme ovale présentent, dans la direction de leur plus grande extension, une longueur comprise entre 18 % et 25 % du diamètre de la forme circulaire (16) du contour extérieur (15).

2. Disque de herse (10) selon la revendication 1,
**caractérisé en ce qu'**il est prévu cinq à huit évidements (11.1 à 11.i).

3. Disque de herse (10) selon l'une des revendications précédentes,
**caractérisé en ce que** la part de la superficie d'un évidement (11.i) située à l'extérieur du cercle de base (18) est plus de deux fois plus grande que la part de la superficie de l'évidement (11.i) située à l'intérieur du cercle de base (18).

4. Disque de herse (10) selon l'une des revendications précédentes,
**caractérisé en ce que** les évidements (11.1 à 11.i) sont disposés entre un cercle de pied (13) et un cercle de tête (14) des évidements (11 à 11.i), qui s'étendent complètement à l'intérieur du disque de herse (10).

5. Disque de herse (10) selon la revendication 4,
**caractérisé en ce qu'**un rayon de pied du cercle de pied (13) des évidements (11.1 à 11.i) est d'au moins 15 % d'un rayon de cercle (r₁₆) de la forme circulaire (16) du contour extérieur (15), et/ou un rayon de tête du cercle de tête (14) des évidements (11.1 à 11.i) est d'au moins 70 % dudit rayon de cercle.

6. Disque de herse (10) selon la revendication 4 ou 5,
**caractérisé en ce que** la surface totale des évidements (11.1 à 11.i) est comprise entre 35 % et 60 % d'une surface annulaire située entre le cercle de pied (13) et le cercle de tête (14).

7. Disque de herse (10) selon l'une des revendications précédentes,
**caractérisé en ce que** le disque de herse (10) est bombé, bombé en continu ou formé avec un méplat dans une zone autour du point central (12).

8. Disque de herse (10) selon l'une des revendications précédentes,
**caractérisé en ce qu'**un biseau ou un tranchant est formé à une périphérie des évidements (11.1 à 11.i).

9. Disque de herse (10) selon l'une des revendications précédentes,
**caractérisé en ce que** des entailles et/ou des découpes (17.1 à 17.i) sont formées dans le contour extérieur (15), et/ou au moins un tranchant (22.1 à 22.i) est formé sur le contour extérieur (15).

10. Disque de herse (10) selon l'une des revendications précédentes,
**caractérisé en ce que** plusieurs disques de herse (10.1 - 10.8) sont disposés sur la herse à disques (40) en engagement par le dessous et en position oblique les uns à côté des autres à l'aide de moyeux (42.1 - 42.8) situés sur des bras (41.1 - 41.8) qui s'étendent depuis leur montage sur la herse à disques (40) dans une direction vers le bas vers le sol (40) et qui sont orientés en oblique dans une direction depuis une extrémité distale vers le centre de la herse à disques (40).
